# EUROPEAN PATENT APPLICATION

(11) **EP 4 831 258 A1**
(43) Date of publication of application: **28.10.2026**
(21) Application number: 24907464.2
(22) Date of filing: 18.12.2024
(51) Int. Cl.: C09J 1/00, H01M 4/13, H01M 4/139, H01M 4/62, H01M 10/0562

(54) **ADHESIVE AGENT**

(30) Priority: 18.12.2023 JP 2023212952
(71) Applicant: Pro Creative Co., Ltd., Kobe-shi, Hyogo 654-0053 (JP)
(72) Inventor: ISHIGAKI, Norikazu, Nagoya-shi, Aichi 464-8601 (JP)
(74) Representative: Meissner Bolte Partnerschaft mbB
(86) International application number: PCT/JP2024/044845
(87) International publication number: WO 2025/135080

(57) **Abstract**

An adhesive agent for use in bonding particles of a powder material to each other or bonding the powder material to a thin-film material, the adhesive agent satisfying the following:
(1) comprising a phosphorus-containing compound that is an ion conductor precursor, and an ion-conducting species;
(2) comprising a phosphorus-containing molten salt that is an ion conductor precursor, the phosphorus-containing molten salt being a salt of an ion-conducting species of phosphoric acid; or
(3) comprising a phosphorus-containing molten salt that is an ion conductor precursor, wherein the powder material has an ion-conducting species on its surface.

## Description

### Technical Field

The present invention relates to an adhesive agent.

### Background Art

In producing a powder-material-bonded body, an impurity phase formed on the surface of the powder material may hinder bonding.

For example, when the powder material is a lithium-ion conductor, lithium carbonate, lithium hydroxide, or the like may be present on the surface of the powder material, leading to inhibition of ion conduction or a decrease in sinterability, which makes it difficult to produce a bonded body of particles of the powder material or a bonded body of a powder material and a thin-film material, and causes performance degradation. On the other hand, when sintering is performed at a high temperature to remove such an impurity phase, elemental diffusion occurs at the bonding interface between particles of the powder material or between the powder material and a thin-film material, resulting in the formation of an impurity phase. Accordingly, development of a technique for surface treatment of a powder material and for bonding at low temperatures is an issue.

### Summary of Invention

### Technical Problem

The present invention is intended to solve the above problems, and an object is to provide a method capable of bonding particles of a powder material to each other or bonding a powder material to a thin-film material at low temperatures.

### Solution to Problem

The present inventor has conducted extensive research to achieve the above object. In terms of a phosphorus molten salt, which is an ion conductor precursor, phosphorus in the solution reacts with an ion-conducting species to form a solid or gel ion conductor, which permeates the matrix surface or pores, thereby promoting bonding at a low temperature between the solid materials via the phosphate-ion conductor. The present inventor also found that a phosphate-ion conductor (gel state) undergoes a reaction or hydrolysis according to the amount of moisture in the air or the amount of water added, to thereby form a phosphate-ion conductor (crystal) or a non-ion conductor on the surface in contact with the moisture, enabling bonding between the solid materials. The present invention has been completed based on these findings and through further extensive research, and includes the following configurations.

### Item 1.

An adhesive agent for use in bonding particles of a powder material to each other or bonding the powder material to a thin-film material, the adhesive agent satisfying the following:
(1) comprising a phosphorus-containing molten salt that is an ion conductor precursor, and an ion-conducting species;
(2) comprising a phosphorus-containing molten salt that is an ion conductor precursor, the phosphorus-containing molten salt being a salt of an ion-conducting species of phosphoric acid; or
(3) comprising a phosphorus-containing molten salt that is an ion conductor precursor, wherein the powder material has an ion-conducting species on its surface.

### Item 2.

The adhesive agent according to Item 1, wherein the powder material is at least one selected from the group consisting of an ion conductor, an electrode active material, a metal material, an organic material, a glass material, and a ceramic material.

### Item 3.

The adhesive agent according to Item 1 or 2, wherein the adhesive agent is a liquid, a gel, or a solid.

### Item 4.

The adhesive agent according to any one of Items 1 to 3, wherein the phosphorus-containing molten salt is at least one selected from the group consisting of phosphoric acid, a hydrogen phosphate, a condensed phosphoric acid, and an organophosphate compound.

### Item 5.

The adhesive agent according to any one of Items 1 to 4, wherein the ion-conducting species comprises at least one selected from the group consisting of an alkali metal ion and an alkaline earth metal ion.

### Item 6.

The adhesive agent according to any one of Items 1 to 5, wherein the adhesive agent satisfies condition (1) and is a mixture comprising a mixture of the phosphorus-containing molten salt and the ion-conducting species, and a solvent.

### Item 7.

A method for producing a bonded body of particles of a powder material or a bonded body of the powder material and a thin-film material, the method comprising:
(I) bringing the powder material, or the powder material and the thin-film material, into contact with the adhesive agent according to any one of Items 1 to 6.

### Item 8.

The production method according to Item 7, wherein in step (I), a pressure treatment is performed after the contact.

### Item 9.

The production method according to Item 7 or 8, further comprising:
(II) performing heating after step (1).

### Item 10.

The production method according to Item 9, wherein the heating in step (II) is performed at a temperature of 30 to 500°C.

### Advantageous Effects of Invention

The present invention enables bonding particles of a powder material to each other or bonding the powder material to a thin-film material at low temperatures.

### Brief Description of Drawings

Fig. 1 shows an X-ray diffraction pattern of the phosphorus-containing molten salt obtained in Synthesis Example 1.
Fig. 2 shows the appearance of the phosphorus-containing molten salt obtained in Synthesis Example 1.
Fig. 3 shows the state of viscosity of the phosphorus-containing molten salt obtained in Synthesis Example 1.
Fig. 4 shows X-ray diffraction patterns of the lithiumand phosphorus-containing molten salt (adhesive agent) of Example 1.
Fig. 5 shows a Nyquist plot of the lithium- and phosphorus-containing molten salt (adhesive agent) obtained in Example 2.
Fig. 6 shows a Nyquist plot of the silicon-added, lithium- and phosphorus-containing molten salt (adhesive agent) obtained in Example 3.
Fig. 7 shows the appearance of the silicon-added, lithium- and phosphorus-containing molten salt (adhesive agent) obtained in Example 3.
Fig. 8 shows the appearance of the solution obtained by adding pure water to the lithium- and phosphorus-containing molten salt obtained in Example 4.
Fig. 9 shows a Nyquist plot of the pellet of a bonded ion conductor produced in Example 4.
Fig. 10 shows X-ray diffraction patterns of the pellet of a bonded ion conductor produced in Example 4.
Fig. 11 shows cross-sectional scanning electron microscopy (SEM) images of the pellet of a bonded ion conductor produced in Example 4.
Fig. 12 shows X-ray diffraction patterns of the pellet of a bonded ion conductor produced in Example 5.
Fig. 13 shows cross-sectional scanning electron microscopy (SEM) images of the pellet of a bonded ion conductor produced in Example 5.
Fig. 14 shows the appearances of the pellet of a bonded ion conductor produced in Example 5.
Fig. 15 shows the results of the constant-voltage charge-discharge measurement of the all-solid-state battery produced in Example 6.
Fig. 16 shows the results of Reference Example 1.
Fig. 17 shows the results of Reference Example 2.
Fig. 18 shows the results of Reference Example 3.
Fig. 19 shows the Bode plot and appearance photographs of the adhesive agent produced in Example 7.
Fig. 20 shows the Bode plot and appearance photographs of the adhesive agent produced in Example 8 (elements added: Nb, W, Mo, Zr, Ta, or Hf).
Fig. 21 shows the Bode plot and appearance photographs of the adhesive agent produced in Example 8 (elements added: Ni, Ti, V, Cr, Mn, Fe, or Co).
Fig. 22 shows the Bode plot and appearance photographs of the adhesive agent produced in Example 8 (elements added: La or Ce).
Fig. 23 shows the Bode plot and appearance photographs of the adhesive agent produced in Example 9 (elements added: B, Al, Ga, or In).
Fig. 24 shows the Bode plot and appearance photographs of the adhesive agent produced in Example 10 (elements added: Ge or Si).
Fig. 25 shows the Bode plot and appearance photographs of the adhesive agent produced in Example 11 (elements added: Br, Cl, I, or F).
Fig. 26 shows appearance photographs of the adhesive agents produced in Examples 12 and 13 (elements added: Cu, Zn, or N (ammonium ion)).
Fig. 27 shows the Bode plot and appearance photographs of the adhesive agent produced in Example 12 (elements added: Cu or Zn).
Fig. 28 shows an appearance photograph of the adhesive agent produced in Example 13 (elements added: N).

### Description of Embodiments

In the present specification, the term "comprise" or "contain" is a concept that encompasses the meanings of both consisting essentially of and consisting of.

In the present specification, a range indicated by "A to B" means A or more and B or less unless otherwise specified.

### 1. Adhesive Agent: First Aspect

An adhesive agent according to a first aspect of the present invention is an adhesive agent for use in bonding particles of a powder material to each other or bonding the powder material to a thin-film material, the adhesive agent
(1) comprising a phosphorus-containing molten salt that is an ion conductor precursor, and an ion-conducting species.

The adhesive agent of the present invention encompasses materials in the form of not only liquids but also solids and gels. For example, the adhesive agent of the present invention may be present as an amorphous solid immediately after production; however, when left in air, it gradually absorbs moisture from the air to form a gel and can then liquefy over time.

### (1-1) Phosphorus-containing Molten Salt

The phosphorus-containing molten salt is not particularly limited. Due to the presence of an ion-conducting species, the phosphorus-containing molten salt is converted into an ion conductor, enabling bonding at a low temperature between particles of a powder material or between the powder material and a thin-film material via the ion conductor. Accordingly, the phosphorus-containing molten salt is an ion conductor precursor.

From the viewpoint of ease of handling in air, the phosphorus-containing molten salt is preferably liquid at an ordinary temperature (in particular, 25°C).

Since the phosphorus-containing molten salt is converted into an ion conductor due to the presence of an ion-conducting species, bonding can be performed at a low temperature between particles of a powder material or between the powder material and a thin-film material via the phosphorus-containing ion conductor; therefore, the melting temperature of the phosphorus-containing molten salt is preferably about the heating temperature when the production method of the present invention described below is used. For example, when the phosphorus-containing molten salt is ammonium dihydrogen phosphate, specifically, the melting temperature is preferably 170 to 300°C, in particular, 190 to 240°C.

Examples of such a phosphorus-containing molten salt as an ion conductor precursor include phosphoric acid, hydrogen phosphates (e.g., ammonium dihydrogen phosphate, sodium dihydrogen phosphate, potassium dihydrogen phosphate, calcium dihydrogen phosphate, cobalt dihydrogen phosphate, zinc dihydrogen phosphate, ammonium monohydrogen phosphate, sodium monohydrogen phosphate, potassium monohydrogen phosphate, calcium monohydrogen phosphate, cobalt monohydrogen phosphate, and zinc monohydrogen phosphate), condensed phosphoric acids (e.g., orthophosphates, pyrophosphates, triphosphates, tetraphosphates, and polyphosphates), and organophosphate compounds (e.g., phosphine oxides, phosphonate esters, and phosphate esters). These phosphorus-containing molten salts may be used singly or in a combination of two or more.

Additive materials may be used for the phosphorus-containing molten salt. Examples of the additive materials include metal elements (e.g., transition metal elements, such as vanadium, chromium, titanium, manganese, iron, cobalt, nickel, copper, zinc, hafnium, and lanthanum; and typical metal elements, such as aluminum, gallium, and indium), metalloid elements (e.g., boron, germanium, and silicon), non-metal elements (e.g., nitrogen, fluorine, chlorine, bromine, iodine, and sulfur), as well as hydrides, oxides, carbides, carbonates, and hydrates thereof. These may be used singly or in a combination of two or more. In the case of an inorganic phosphorus-containing molten salt, the content of each metal element is not particularly limited, and is preferably about 0 to 3 mol, and more preferably about 0.1 to 0.5 mol, based on 1 mol of phosphorus in the inorganic phosphorus-containing molten salt.

Additionally, organic compounds, such as amine compounds (e.g., methylamine and ethylamine), carbamide compounds (e.g., urea), and guanidine compounds (e.g., guanidine, guanidinium sulfide, and arginine), may also be contained. When the organic compound is urea, the content may be about 0 to 3 mol, and particularly about 0.1 to 0.5 mol, based on 1 mol of phosphorus.

The content of the phosphorus-containing molten salt is not particularly limited, and is preferably 0.05 to 0.99 mol, and more preferably 0.15 to 0.80 mol, based on 1 mol of the total amount of the phosphorus-containing molten salt and the ion-conducting species.

### (1-2) Ion-conducting Species

The ion-conducting species is not particularly limited. A reaction occurs between phosphorus in the solution and the ion-conducting species to form an ion conductor, and the ion conductor is formed on the matrix surface or pores, whereby bonding at a low temperature is facilitated between the solid materials via the phosphate-ion conductor. Therefore, the ion-conducting species preferably comprises an alkali metal ion (e.g., a lithium ion, a sodium ion, or a potassium ion), an alkaline earth metal ion (e.g., a magnesium ion or a calcium ion), and the like.

Specific examples of such ion-conducting species include lithium carbonate, lithium hydroxide, lithium fluoride, lithium chloride, lithium bromide, lithium iodide, sodium carbonate, sodium hydroxide, sodium fluoride, sodium chloride, sodium bromide, sodium iodide, potassium carbonate, potassium hydroxide, potassium fluoride, potassium chloride, potassium bromide, potassium iodide, magnesium carbonate, magnesium hydroxide, magnesium fluoride, magnesium chloride, magnesium bromide, magnesium iodide, calcium carbonate, calcium hydroxide, calcium fluoride, calcium chloride, calcium bromide, and calcium iodide. These ion-conducting species may be used singly or in a combination of two or more.

The content of the ion-conducting species is not particularly limited, and is preferably 0.01 to 0.95 mol, and more preferably 0.20 to 0.85 mol, based on 1 mol of the total amount of the phosphorus-containing molten salt and the ion-conducting species.

The content of the ion-conducting species is not particularly limited, and is preferably 0 to 3.00 mol, and more preferably 0.05 to 2.00 mol, based on 1 mol of the phosphorus-containing molten salt; the content is even more preferably 0.05 to 0.50 mol when production is performed in air.

### (1-3) Solvent

Solvents that can be used for the adhesive agent of the present invention are not particularly limited. Since phosphate is formed by hydrolysis, water is preferably not used as a solvent when the adhesive agent of the present invention is used as a solution and applied to bond the materials to each other. However, water can be used when the adhesive agent of the present invention is applied between the materials to generate phosphate for fixation.

The content of water varies depending on the type of ion conductor (phosphorus-containing salt or the like) to be formed by hydrolysis and can be adjusted as appropriate.

### (1-4) Adhesive Agent

An adhesive agent of the present invention that satisfies the requirements described above can be used to bond particles of a powder material to each other or bond a powder material to a thin-film material. In the adhesive agent of the present invention, phosphorus in the phosphorus-containing molten salt reacts with the ion-conducting species, whereby a solid ion conductor can be formed at a low temperature, or a viscous solution or a gel can be formed by heating. The permeation of the solution or gel into the matrix surface or pores chemically and physically facilitates bonding between the solid materials. Therefore, there are no particular limitations on the types of the powder material and the thin-film material to be bonded.

Examples of usable powder materials include ion conductors, electrode active materials, metal materials, organic materials, glass materials, wood-based materials, and ceramic materials. Examples of usable ion conductors include phosphorus-containing ion conductors (e.g., oxide solid electrolytes, such as LiTa₂PO₈ and Li₃PO₄; and sulfide solid electrolytes, such as Li₁₀GeP₂S₁₂). Examples of usable electrode active materials include LiCoO₂, LiTiO₂, LiFePO₄, LiCoPO₄, LiFeMnO₄, Li₂MnO₃, and LiMn₂O₄. Examples of usable metal materials include aluminum, stainless steel, and nickel. Examples of usable organic materials include polyethylene and polypropylene. Examples of usable glass materials include soda-lime glass, borosilicate glass, and phosphate glass. Examples of usable wood-based materials include pulp. Examples of usable ceramic materials include alumina, zirconia, and silicon carbide. These powder materials may be used singly or in a combination of two or more.

Examples of usable thin-film materials include aluminum foil, copper foil, nickel foil, and iron foil. These thin-film materials may be used singly or in a combination of two or more.

In the adhesive agent of the present invention, if the phosphorus-containing molten salt is dissolved in a large amount of water before the phosphorus-containing molten salt and the ion-conducting species are mixed, the phosphorus-containing molten salt contained in the large amount of water tends to react first with the ion-conducting species to form an ion conductor (crystal); therefore, from the viewpoint of facilitating bonding between the solid materials at low temperatures, the adhesive agent of the present invention is preferably a mixture comprising a mixture of the phosphorus-containing molten salt and the ion-conducting species, and a solvent.

However, in the adhesive agent of the present invention, mixing the phosphorus-containing molten salt and water before mixing the phosphorus-containing molten salt and the ion-conducting species is not completely excluded. In order to control viscosity and phosphorus condensation, the phosphorus-containing molten salt can first be mixed with a small amount of water. In this case, the amount of water to be used can be 10 parts by mass or less based on 100 parts by mass of the phosphorus-containing molten salt.

The adhesive agent of the present invention as described above does not undergo combustion, thus enabling bonding between particles of a powder material or between a powder material and a thin-film material even in air at room temperature. Therefore, when the powder material is an ion conductor, the ionic conductivity can be measured. Furthermore, since the adhesive agent of the present invention can be used in air, mass production is possible using heating and pressure rollers or the like in the process during product production. When the powder material is an ion conductor, the resulting bonded body also has excellent heat resistance.

### 2. Adhesive Agent: Second Aspect

An adhesive agent according to a second aspect of the present invention is an adhesive agent for use in bonding particles of a powder material to each other or bonding the powder material to a thin-film material, the adhesive agent
(2) comprising a phosphorus-containing molten salt that is an ion conductor precursor, the phosphorus-containing molten salt being a salt of an ion-conducting species of phosphoric acid.

The adhesive agent of the present invention encompasses materials in the form of not only liquids but also solids and gels. For example, the adhesive agent of the present invention may be present as an amorphous solid immediately after production; however, when left in air, it gradually absorbs moisture from the air to form a gel and can then liquefy over time.

### (2-1) Phosphorus-containing Molten Salt

The phosphorus-containing molten salt is not particularly limited. Due to the presence of an ion-conducting species, the phosphorus-containing molten salt is converted into an ion conductor, enabling bonding at a low temperature between particles of a powder material or between the powder material and a thin-film material via the ion conductor. Accordingly, the phosphorus-containing molten salt is an ion conductor precursor.

From the viewpoint of ease of handling in air, the phosphorus-containing molten salt is preferably liquid at an ordinary temperature (in particular, 25°C).

Since the phosphorus-containing molten salt is converted into an ion conductor due to the presence of an ion-conducting species, bonding can be performed at a low temperature between particles of a powder material or between the powder material and a thin-film material via the phosphorus-containing ion conductor; therefore, the melting temperature of the phosphorus-containing molten salt is preferably about the heating temperature when the production method of the present invention described below is used. For example, when the phosphorus-containing molten salt is sodium dihydrogen phosphate, specifically, the melting temperature is preferably 40 to 150°C, particularly 50 to 80°C.

The phosphorus-containing molten salt that is an ion conductor precursor is a salt of an ion-conducting species of phosphoric acid. Examples of salts of ion-conducting species constituting the salt of an ion-conducting species of phosphoric acid include alkali metal salts (e.g., sodium salts and potassium salts) and alkaline earth metal salts (e.g., magnesium salts and calcium salts).

Specific examples of such a salt of an ion-conducting species of phosphoric acid include hydrogen phosphates (e.g., sodium dihydrogen phosphate, potassium dihydrogen phosphate, calcium dihydrogen phosphate, sodium hydrogen phosphate, potassium hydrogen phosphate, and calcium hydrogen phosphate). These salts of an ion-conducting species of phosphoric acid may be used singly or in a combination of two or more.

Additive materials may be used for the phosphorus-containing molten salt. Examples of the additive materials include metal elements (e.g., transition metal elements, such as vanadium, chromium, titanium, manganese, iron, cobalt, nickel, copper, zinc, hafnium, and lanthanum; and typical metal elements, such as aluminum, gallium, and indium), metalloid elements (e.g., boron, germanium, and silicon), non-metal elements (e.g., nitrogen, fluorine, chlorine, bromine, iodine, and sulfur), and hydrides, oxides, carbides, carbonates, and hydrates thereof, and organic compounds, such as amine compounds (e.g., methylamine and ethylamine) and carbamide compounds (e.g., urea). These may be used singly or in a combination of two or more. In the case of an inorganic phosphorus-containing molten salt, the content of each metal element is not particularly limited, and can be about 0 to 3 mol, and preferably about 0 to 0.5 mol, based on 1 mol of phosphorus in the inorganic phosphorus-containing molten salt; when these metal elements are used, the lower limit of the content can also be set to about 0.01 mol.

Additionally, organic compounds, such as amine compounds (e.g., methylamine and ethylamine), carbamide compounds (e.g., urea), and guanidine compounds (e.g., guanidine, guanidinium sulfide, and arginine), may also be contained. When the organic compound is urea, the content may be about 0 to 3 mol, and particularly about 0.1 to 0.5 mol, based on 1 mol of phosphorus.

The phosphorus-containing molten salt described above may comprise not only the salt of an ion-conducting species of phosphoric acid but also a phosphorus-containing molten salt other than the salt of an ion-conducting species of phosphoric acid, for the purpose of, for example, adjusting the concentration of the ion-conducting species.

Examples of the phosphorus-containing molten salt other than the salt of an ion-conducting species of phosphoric acid include phosphoric acid, ammonium hydrogen phosphates (e.g., ammonium dihydrogen phosphate and ammonium monohydrogen phosphate), condensed phosphoric acids (e.g., orthophosphates, pyrophosphates, triphosphates, tetraphosphates, and polyphosphates), and organophosphate compounds (e.g., phosphine oxides, phosphonate esters, and phosphate esters). These phosphorus-containing molten salts other than the salt of an ion-conducting species of phosphoric acid can be used singly or in a combination of two or more.

When the salt of an ion-conducting species of phosphoric acid and a phosphorus-containing molten salt other than the salt of an ion-conducting species of phosphoric acid are contained, the content of the salt of an ion-conducting species of phosphoric acid is not particularly limited, and is preferably 0.05 to 0.99 mol, and more preferably 0.15 to 0.80 mol, based on 1 mol of the total amount of the phosphorus-containing molten salts. Similarly, the content of the phosphorus-containing molten salt other than the salt of an ion-conducting species of phosphoric acid is not particularly limited, and is preferably 0.01 to 0.95 mol, and more preferably 0.20 to 0.85 mol, based on 1 mol of the total amount of the phosphorus-containing molten salts. Further, the content of the salt of an ion-conducting species of phosphoric acid is not particularly limited, and is preferably 0 to 3.00 mol, and more preferably 0.05 to 2.00 mol, based on 1 mol of the phosphorus-containing molten salt other than the salt of an ion-conducting species of phosphoric acid; the content is even more preferably 0.05 to 0.50 mol when production is performed in air.

### (2-2) Ion-conducting Species

In the adhesive agent according to the second aspect of the present invention, an ion-conducting species is contained in the salt of an ion-conducting species of phosphoric acid, which is the phosphorus-containing molten salt; therefore, addition of an ion-conducting species separately from the phosphorus-containing molten salt is not required. However, this does not preclude adding the ion-conducting species described in (1-2) above separately from the phosphorus-containing molten salt. When the ion-conducting species as described in (1-2) above is contained separately from the phosphorus-containing molten salt, the content of the phosphorus-containing molten salt is preferably 0.05 to 0.99 mol, and more preferably 0.15 to 0.80 mol, based on 1 mol of the total amount of the phosphorus-containing compound and the ion-conducting species. Similarly, the content of the ion-conducting species is preferably 0.01 to 0.95 mol, and more preferably 0.20 to 0.85 mol, based on 1 mol of the total amount of the phosphorus-containing molten salt and the ion-conducting species. Further, the content of the ion-conducting species is not particularly limited, and is preferably 0 to 3.00 mol, and more preferably 0.05 to 2.00 mol, based on 1 mol of the phosphorus-containing molten salt; the content is even more preferably 0.05 to 0.50 mol when production is performed in air.

### (2-3) Solvent

Solvents that can be used for the adhesive agent of the present invention are not particularly limited. Since phosphate is formed by hydrolysis, water is preferably not used as a solvent when the adhesive agent of the present invention is used as a solution and applied to bond the materials to each other. However, water can be used when the adhesive agent of the present invention is applied between the materials to generate phosphate for fixation.

The content of water varies depending on the type of ion conductor (phosphorus-containing salt or the like) to be formed by hydrolysis and can be adjusted as appropriate.

### (2-4) Adhesive Agent

An adhesive agent of the present invention that satisfies the requirements described above can be used to bond particles of a powder material to each other or bond a powder material to a thin-film material. In the adhesive agent of the present invention, the salt of an ion-conducting species of phosphoric acid is present as the phosphorus-containing molten salt, whereby a solid ion conductor can be formed at a low temperature, or a viscous solution or a gel can be formed by heating. The permeation of the solution or gel into the matrix surface or pores chemically and physically facilitates bonding between the solid materials. Therefore, there are no particular limitations on the types of the powder material and the thin-film material to be bonded.

Examples of usable powder materials include ion conductors, electrode active materials, metal materials, organic materials, glass materials, wood-based materials, and ceramic materials. Examples of usable ion conductors include phosphorus-containing ion conductors (e.g., oxide solid electrolytes, such as LiTa₂PO₈ and Li₃PO₄; and sulfide solid electrolytes, such as Li₁₀GeP₂S₁₂). Examples of usable electrode active materials include LiCoO₂, LiTiO₂, LiFePO₄, LiCoPO₄, LiFeMnO₄, Li₂MnO₃, and LiMn₂O₄. Examples of usable metal materials include aluminum, stainless steel, and nickel. Examples of usable organic materials include polyethylene and polypropylene. Examples of usable glass materials include soda-lime glass, borosilicate glass, and phosphate glass. Examples of usable wood-based materials include pulp. Examples of usable ceramic materials include alumina, zirconia, and silicon carbide. These powder materials may be used singly or in a combination of two or more.

Examples of usable thin-film materials include aluminum foil, copper foil, nickel foil, and iron foil. These thin-film materials may be used singly or in a combination of two or more.

In the adhesive agent of the present invention, the phosphorus-containing molten salt can be mixed with a small amount of water in order to control viscosity and phosphorus condensation. In this case, the amount of water to be used can be 10 parts by mass or less based on 100 parts by mass of the phosphorus-containing molten salt.

The adhesive agent of the present invention as described above does not undergo combustion, thus enabling bonding between particles of a powder material or between a powder material and a thin-film material even in air at room temperature. Therefore, when the powder material is an ion conductor, the ionic conductivity can be measured. Furthermore, since the adhesive agent of the present invention can be used in air, mass production is possible using heating and pressure rollers or the like in the process during product production. When the powder material is an ion conductor, the resulting bonded body also has excellent heat resistance.

### 3. Adhesive Agent: Third Aspect

An adhesive agent according to a third aspect of the present invention is an adhesive agent for use in bonding particles of a powder material to each other or bonding the powder material to a thin-film material, the adhesive agent
(3) comprising a phosphorus-containing molten salt that is an ion conductor precursor, wherein the powder material has an ion-conducting species on its surface.

The adhesive agent of the present invention encompasses materials in the form of not only liquids but also solids and gels. For example, the adhesive agent of the present invention may be present as an amorphous solid immediately after production; however, when left in air, it gradually absorbs moisture from the air to form a gel and can then liquefy over time.

### (3-1) Phosphorus-containing Molten Salt

The phosphorus-containing molten salt may be selected from those described in Item (1-1) above. The same applies to preferred specific examples and the like.

### (3-2) Ion-conducting Species

In the third aspect of the present invention, the powder material has an ion-conducting species on its surface; therefore, addition of an ion-conducting species separately from the phosphorus-containing molten salt is not required. However, this does not preclude adding the ion-conducting species described in (1-2) above separately from the phosphorus-containing molten salt. When the ion-conducting species as described in (1-2) above is contained separately from the phosphorus-containing molten salt, the content of the phosphorus-containing molten salt is preferably 0.05 to 0.99 mol, and more preferably 0.15 to 0.80 mol, based on 1 mol of the total amount of the phosphorus-containing compound and the ion-conducting species. Similarly, the content of the ion-conducting species is preferably 0.01 to 0.95 mol, and more preferably 0.20 to 0.85 mol, based on 1 mol of the total amount of the phosphorus-containing molten salt and the ion-conducting species. Further, the content of the ion-conducting species is not particularly limited, and is preferably 0 to 3.00 mol, and more preferably 0.05 to 2.00 mol, based on 1 mol of the phosphorus-containing molten salt; the content is even more preferably 0.05 to 0.50 mol when production is performed in air.

### (3-3) Solvent

Solvents that can be used for the adhesive agent of the present invention are not particularly limited. Since phosphate is formed by hydrolysis, water is preferably not used as a solvent when the adhesive agent of the present invention is used as a solution and applied to bond the materials to each other. However, water can be used when the adhesive agent of the present invention is applied between the materials to generate phosphate for fixation.

The content of water varies depending on the type of ion conductor (phosphorus-containing salt or the like) to be formed by hydrolysis and can be adjusted as appropriate.

### (3-4) Adhesive Agent

An adhesive agent of the present invention that satisfies the requirements described above can be used to bond particles of a powder material to each other or bond a powder material to a thin-film material. In the adhesive agent of the present invention, an ion-conducting species is present on the surface of a powder material, whereby a solid ion conductor can be formed at a low temperature, or a viscous solution or a gel can be formed by heating. The permeation of the solution or gel into the matrix surface or pores chemically and physically facilitates bonding between the solid materials.

The ion-conducting species on the surface of the powder material may be selected from those described in Item (1-2) above.

Examples of usable powder materials include ion conductors, electrode active materials, metal materials, organic materials, glass materials, wood-based materials, and ceramic materials. Examples of usable ion conductors include phosphorus-containing ion conductors (e.g., oxide solid electrolytes, such as LiTa₂PO₈ and Li₃PO₄; and sulfide solid electrolytes, such as Li₁₀GeP₂S₁₂). Examples of usable electrode active materials include LiCoO₂, LiTiO₂, LiFePO₄, LiCoPO₄, LiFeMnO₄, Li₂MnO₃, and LiMn₂O₄. Examples of usable metal materials include aluminum, stainless steel, and nickel. Examples of usable organic materials include polyethylene and polypropylene. Examples of usable glass materials include soda-lime glass, borosilicate glass, and phosphate glass. Examples of usable wood-based materials include pulp. Examples of usable ceramic materials include alumina, zirconia, and silicon carbide. These powder materials may be used singly or in a combination of two or more.

Examples of usable thin-film materials include aluminum foil, copper foil, nickel foil, and iron foil. These thin-film materials may be used singly or in a combination of two or more.

In the adhesive agent of the present invention, the phosphorus-containing molten salt can be mixed with a small amount of water in order to control viscosity and phosphorus condensation. In this case, the amount of water to be used can be 10 parts by mass or less based on 100 parts by mass of the phosphorus-containing molten salt.

The adhesive agent of the present invention as described above does not undergo combustion, thus enabling bonding between particles of a powder material or between a powder material and a thin-film material even in air at room temperature. Therefore, when the powder material is an ion conductor, the ionic conductivity can be measured. Furthermore, since the adhesive agent of the present invention can be used in air, mass production is possible using heating and pressure rollers or the like in the process during product production. When the powder material is an ion conductor, the resulting bonded body also has excellent heat resistance.

### 4. Method for Producing a Bonded Body

A bonded body of particles of a powder material or a bonded body of the powder material and a thin-film material of the present invention is not particularly limited, and can be obtained by a production method comprising:
(I) bringing the powder material, or the powder material and the thin-film material, into contact with the adhesive agent of the present invention.

### (4-1) Step (I)

In step (I), the method of bringing a powder material, or the powder material and a thin-film material, into contact with the adhesive agent of the present invention is not particularly limited and can be performed according to a common method. For example, mixing can be performed in a mortar.

In step (I), the amount of the phosphorus-containing molten salt solution of the present invention to be added is not particularly limited. From the viewpoint of facilitating the production of an ion conductor by hydrolysis and maintaining ease of molding while facilitating bonding at a low temperature between particles of a powder material or between a powder material and a thin-film material via the phosphorus-containing ion conductor, the amount is preferably 1000 parts by mass or less, and more preferably 0.01 to 150 parts by mass, based on 100 parts by mass of the solid materials. The lower limit of the amount of the phosphorus-containing molten salt solution of the present invention to be added may be, for example, 0.1 parts by mass, 0.5 parts by mass, or the like.

In step (I), in order to facilitate forming a bonded body of particles of a powder material or a bonded body of a powder material and a thin-film material, a pressure treatment may be performed after mixing. In this case, the pressure to be applied is not particularly limited, and can be 1 to 1000 MPa, and preferably 100 to 500 MPa.

The pressing time is not particularly limited. From the viewpoint of facilitating forming a bonded body of particles of a powder material or a bonded body of a powder material and a thin-film material, the pressing time may be 0.1 to 10 minutes, and preferably 1 to 5 minutes.

### (4-2) Step (II)

In the method for producing a bonded body of solid materials of the present invention, reactions of the phosphorus molten salt, water (including moisture in the air), and the ion-conducting species can occur even at low temperatures (-10°C to room temperature). Therefore, although not essential, the method can also comprise step (2) of heating the mixture obtained in step (1) after step (1) above.

By heating, the viscosity of the adhesive agent of the present invention can be controlled, or the degree of condensation of the adhesive agent of the present invention can be changed, whereby the solution permeates into pores and irregularities between the materials, or the reactivity is increased between the bonding material surface and phosphate ions, thereby facilitating bonding between the materials. In this case, the heating temperature is not particularly limited and can be 30 to 500°C, and preferably 50 to 250°C, although it varies depending on the type of ion conductor to be formed.

The holding time during heating is not particularly limited and can be 0.1 to 10 hours, and preferably 1 to 5 hours, although it varies depending on the type of ion conductor to be formed.

Accordingly, even if a heat treatment is performed, the temperature is low; therefore, it is possible to suppress elemental diffusion due to heating at the bonding interface and to suppress the formation of an impurity phase.

### Examples

The present invention will be described in more detail below with reference to Examples. However, the present invention is not limited to these Examples and the like.

### Synthesis Example 1: Production Method for Phosphorus-containing Molten Salt

A phosphorus-containing molten salt was produced using commercially available NH₄H₂PO₄ and pure water.

First, at room temperature (25°C) in air, 0.57 g of NH₄H₂PO₄ was dissolved in 15 mL of pure water and stirred, and then melted at 200°C or higher to decompose the NH₄H₂PO₄. As a result, a transparent and viscous phosphorus-containing molten salt was produced. Although a small amount of water was added to promote the decomposition of NH₄H₂PO₄ by heating, the addition of water is not necessarily required.

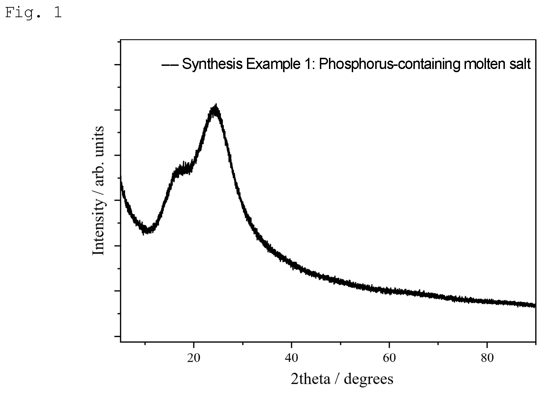

The solution was collected, placed on a glass substrate, and subjected to powder X-ray diffraction measurement (CuKα: λ = 1.5418 Å) to obtain the diffraction pattern of Fig. 1. Since no clear diffraction peaks were observed, it was revealed that the phosphorus-containing molten salt was a solution containing no crystals. In Fig. 1, the peak observed around 2θ = 25° is a peak characteristic of an amorphous material.

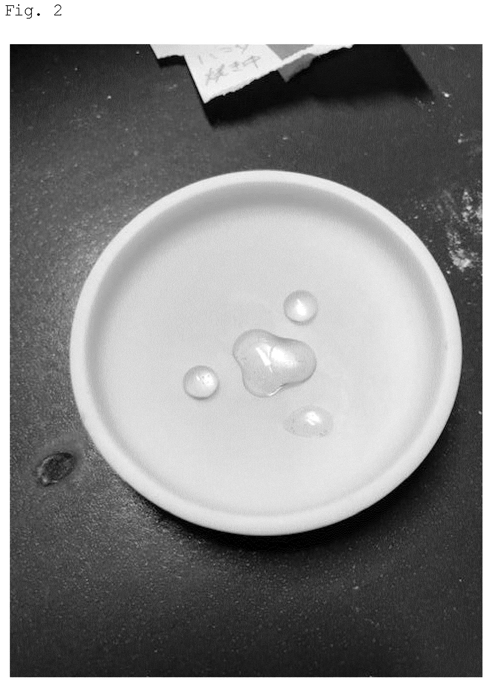

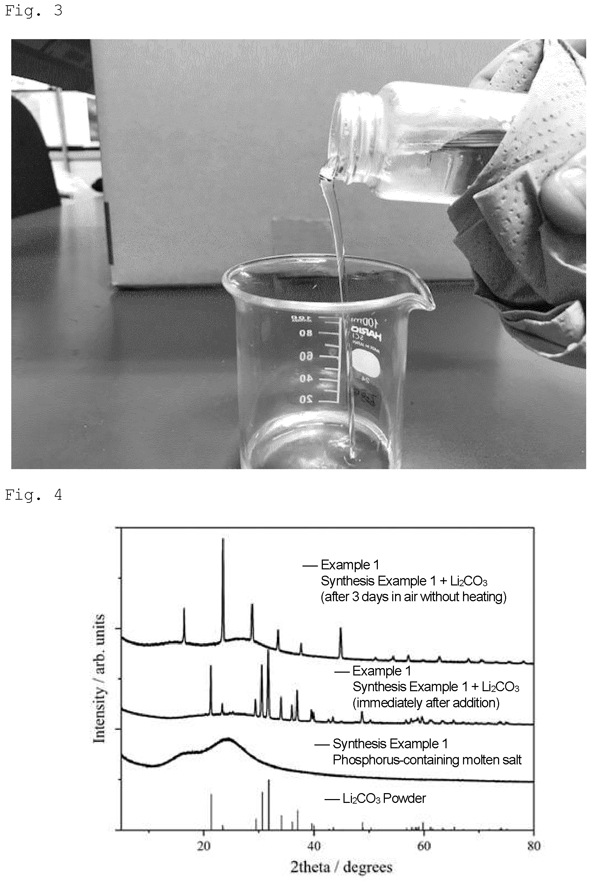

Fig. 2 shows the appearance of the obtained phosphorus-containing solution, and Fig. 3 shows the state of the viscosity of the phosphorus-containing molten salt. As with water, the viscosity decreased at higher temperatures and increased at lower temperatures. The viscosity increased as the heating time increased. The viscosity is considered to be associated with the materials added, the amount of the materials, and the degree of phosphorus condensation.

### Example 1: Production Method for Lithium- and Phosphorus-containing Molten Salt (Adhesive Agent)

Lithium carbonate was added to the phosphorus-containing molten salt obtained in Synthesis Example 1 and melted to produce a transparent adhesive agent containing a transparent or minute white precipitate (Li:P = 3:1 (molar ratio)). For example, when forming Li₃PO₄ from the phosphorus-containing molten salt obtained in Synthesis Example 1, water can be added to the phosphate molten salt, and a Li source, such as Li₂CO₃ or LiOH·H₂O, can be added such that the amount ratio of P to Li is 1:3 (on a molar basis).

Further, the adhesive agent of Example 1, obtained by adding lithium carbonate to the phosphorus-containing molten salt of Synthesis Example 1 at room temperature (25°C) in air, was allowed to stand in air for 3 days, thereby producing a material having characteristic peaks at 2θ = 16°, 23°, 28°, 33°, 37°, and 44°, and a broad peak with weak intensity at 2θ = approximately 25°. These results indicate that while a portion of the adhesive agent crystallized through reaction with moisture in the air, an amorphous material (lithium- and phosphorus-containing molten salt) was also present. Accordingly, in the present invention, crystallization can be achieved by controlling the amount of an ion-conducting species added to the phosphorus-containing molten salt and the amount and timing of moisture addition. When an ion-conducting species is added to the phosphorus-containing molten salt, the production can also be performed while heating.

Fig. 4 shows X-ray diffraction patterns of the adhesive agent obtained in Example 1. In Fig. 4, "Synthesis Example 1 Phosphorus-containing molten salt" refers to a sample of Synthesis Example 1 immediately after production, "Example 1 Synthesis Example 1 + Li₂CO₃ (immediately after addition)" refers to a sample in which lithium carbonate was added to the phosphorus-containing molten salt in Example 1 but remained unmelted, "Example 1 Synthesis Example 1 + Li₂CO₃ (after 3 days in air without heating)" refers to an adhesive agent obtained by storing the sample of "Example 1 Synthesis Example 1 + Li₂CO₃ (immediately after addition)" in air for 3 days without heating, and "Li₂CO₃ powder" refers to a previously reported lithium carbonate.

### Example 2: Production Method for Lithium- and Phosphorus-containing Molten Salt (Adhesive Agent)

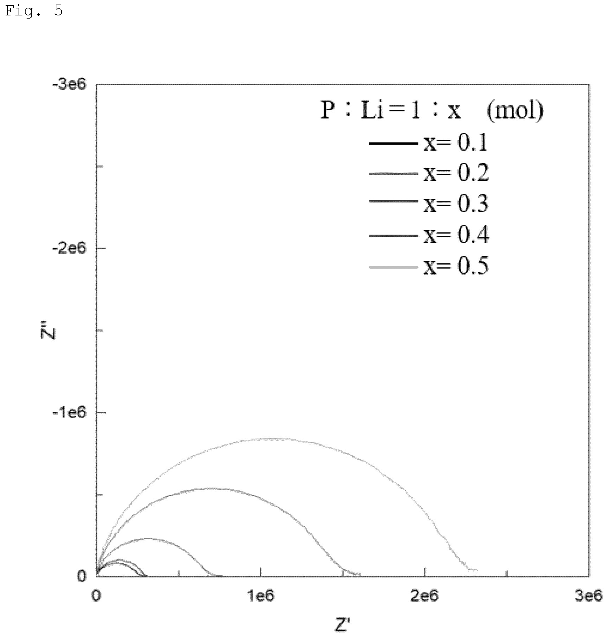

First, at room temperature (25°C) in air, commercially available NH₄H₂PO₄ and commercially available lithium carbonate were used and mixed such that the molar ratio of P to Li was 1:x (x = 0.5, 0.4, 0.3, 0.2, or 0.1), and the mixture was melted at 210°C for 1.5 hours, thereby producing an adhesive agent. The produced adhesive agent was poured into a quartz tube with an inner diameter of 10 mm, aluminum foil was attached as electrodes to both ends of the quartz tube using finger pressure, and cooling was performed at 25°C to obtain a measurement sample in a solid or gel state. The ionic conductivity of the sample was evaluated by an AC impedance method (100 MHz to 100 Hz) (Fig. 5). The physical properties, as well as the viscosity and ionic conductivity with respect to temperature, of the adhesive agent vary depending on the amount of the ion-conducting species, the degree of condensation, or the elements to be added. In addition to the above, an adhesive agent in which the amount ratio of P to Li was 1:1 (on a molar basis) and an adhesive agent in which the amount ratio of P to Li was 1:2 were also produced.

### Example 3: Production Method for Silicon-added, Lithium- and Phosphorus-containing Molten Salt (Adhesive Agent)

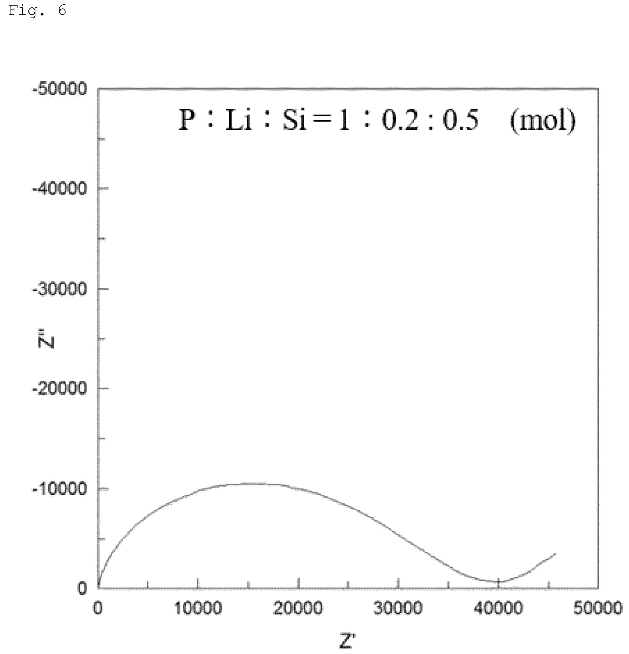

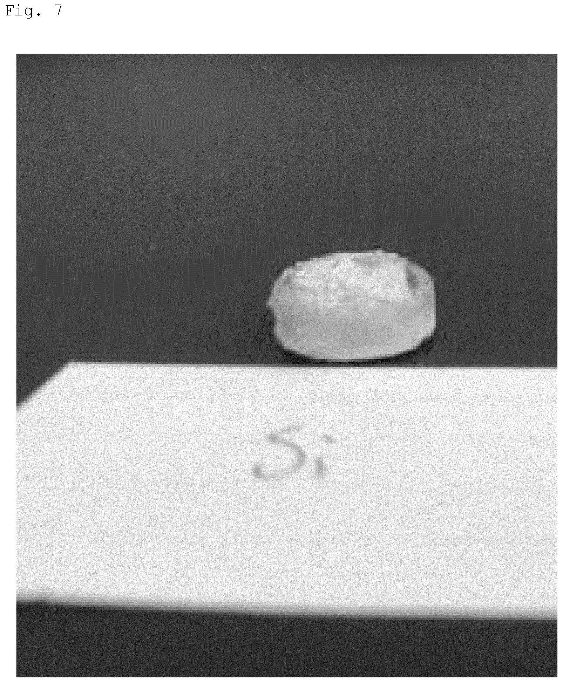

1.5 g of commercially available silica gel was pulverized, added to 50 mL of pure water, and heated at a heating temperature of 50°C or higher while stirring to thereby produce a viscous cloudy white liquid. Thereafter, the produced cloudy white liquid was added to the lithium- and phosphorus-containing molten salt in which the molar ratio of P to Li was adjusted to 1:0.2 in Example 2 such that P:Si:Li was 1:0.2:0.2 (molar ratio), and the mixture was mixed and heated, thereby producing an adhesive agent. The produced adhesive agent was poured into a quartz tube with an inner diameter of 10 mm, aluminum foil was attached as electrodes to both ends of the quartz tube using finger pressure, and cooling was performed at 25°C to obtain a measurement sample in a solid or gel state. The ionic conductivity of the sample was evaluated by an AC impedance method (100 MHz to 100 Hz) (Fig. 6). Fig. 7 shows the appearance of the obtained silicon-added, lithium- and phosphorus-containing molten salt (adhesive agent).

### Example 4

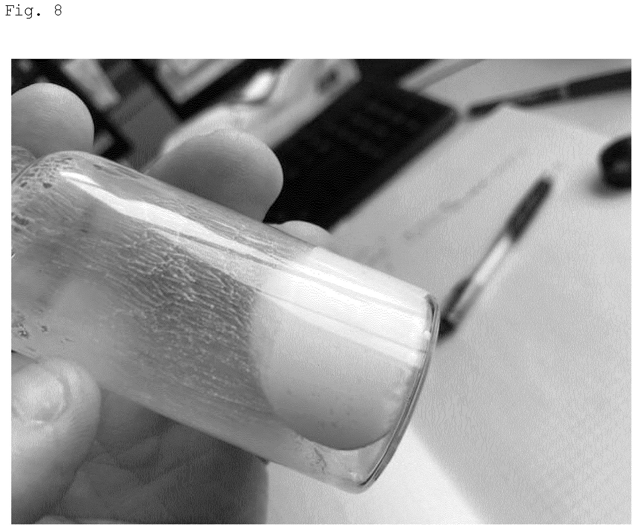

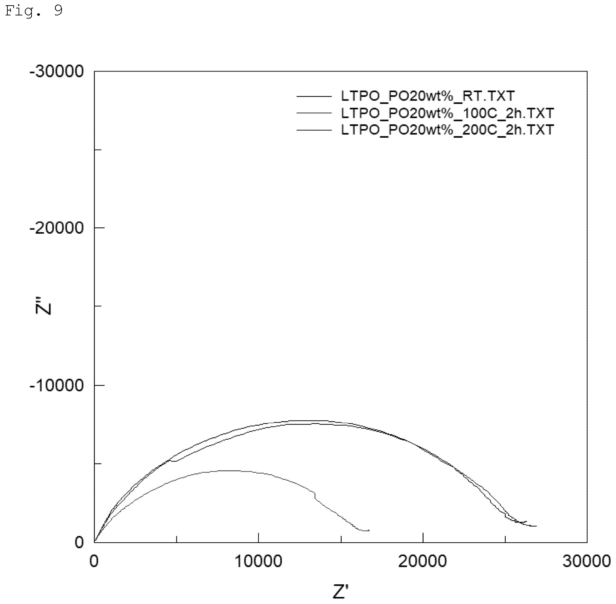

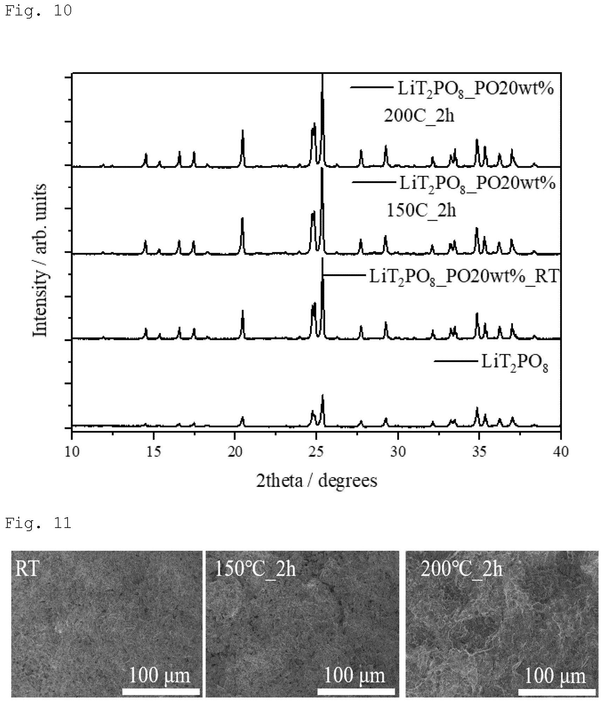

20 mL of pure water was added to the lithium- and phosphorus-containing molten salt (Li:P = 3:1 (molar ratio)) obtained in Example 1. Fig. 8 shows the appearance of the obtained solution. Flexibility similar to that obtained by mixing flour with water was observed, and the solution turned into a powder over time. The obtained solution was added in an amount of 20 mass% to a commercially available LiTa₂PO₈ oxide solid electrolyte powder, followed by mixing in a mortar. Thereafter, the mixture was pressed at 300 MPa for 3 minutes using a 10 mm diameter tablet molding machine and a uniaxial press, and was then (1) left in air, (2) heated at a heating temperature of 150°C for a holding time of 2 hours, or (3) heated at a heating temperature of 200°C for a holding time of 2 hours, thereby forming a pellet of a bonded ion conductor. For evaluation of the pellet, Au current-collecting films were formed on the front and back surfaces of the sintered body by sputtering, and the ionic conductivity was measured by an AC impedance method (100 MHz to 100 Hz) (Fig. 9). Thereafter, X-ray diffraction (XRD) measurement (Fig. 10) and cross-sectional scanning electron microscopy (SEM) observation (Fig. 11) were performed.

### Example 5

A mixed powder obtained in advance by adding a commercially available Li₂CO₃ powder to a commercially available LiTa₂PO₈ oxide solid electrolyte powder (weighed so that P:Li = 1:3 (molar ratio)) was added to the phosphorus-containing molten salt obtained in Synthesis Example 1, and mixed in a mortar. Thereafter, the mixture was pressed at 300 MPa for 3 minutes using a 10 mm diameter tablet molding machine and a uniaxial press, and was then left in air for 3 days, thereby obtaining a bonded ion conductor. At this time, the amount of the phosphorus solution was set to 1 mass%, 5 mass%, or 10 mass%, based on the powder amount of the LiTa₂PO₈ solid electrolyte.

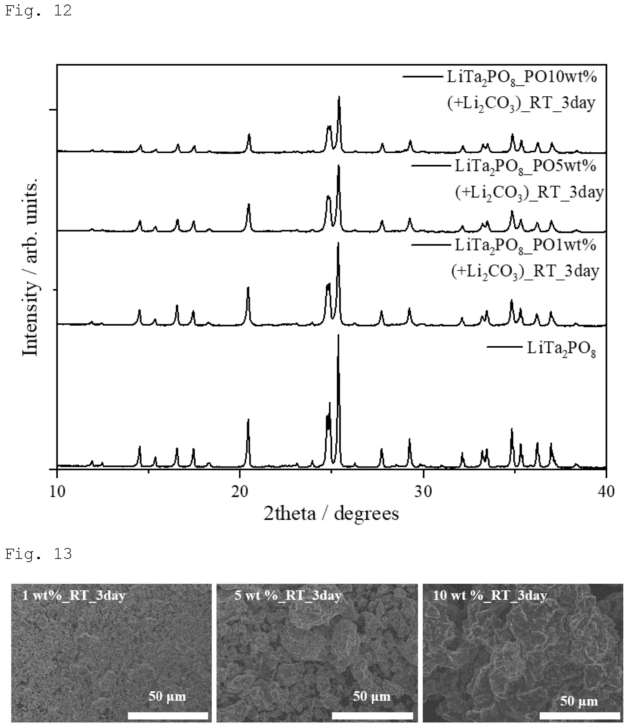

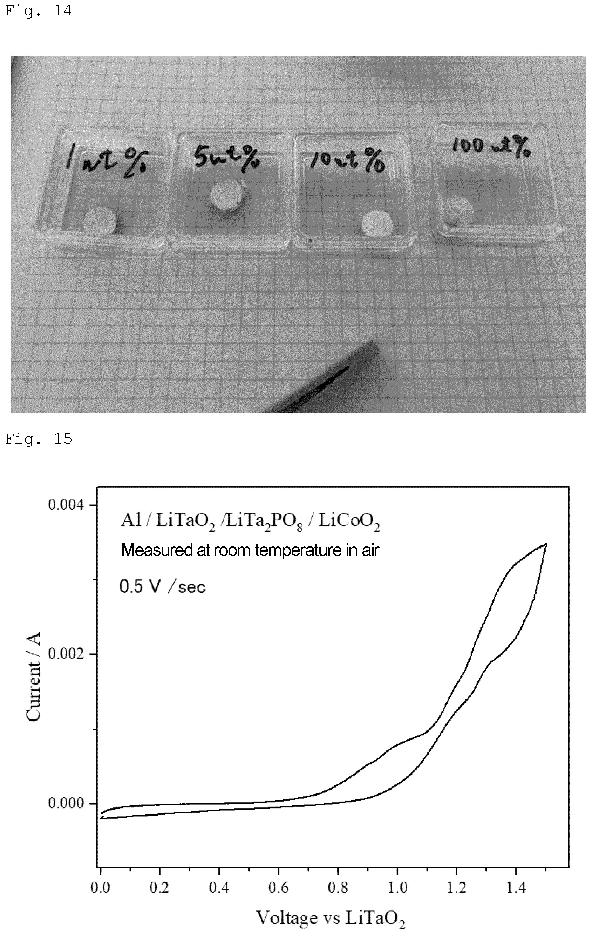

For evaluation of the obtained pellet, X-ray diffraction (XRD) measurement (Fig. 12) and cross-sectional scanning electron microscopy (SEM) observation (Fig. 13) were performed. Fig. 14 shows the appearance of the obtained pellet of the bonded ion conductor. Although an attempt was made to produce pellets in which the amount of the phosphorus solution was 100 mass% based on the powder amount of the LiTa₂PO₈ solid electrolyte, carbon dioxide was generated due to hydrolysis, which made the resulting material brittle and impossible to mold.

### Example 6

The lithium- and phosphorus-containing molten salt in which the molar ratio of Li:P was adjusted to 1:0.05 in Example 1 was added to a mixed powder of a commercially available LiCoO₂ cathode active material and a commercially available acetylene black conductive additive (10 mass% relative to the cathode active material). Separately, the lithium- and phosphorus-containing molten salt in which the molar ratio of Li:P was adjusted to 1:1 in Example 1 was added to a commercially available LiTa₂PO₈ solid electrolyte. Further, separately, addition was performed to a mixed powder of a commercially available LiTaO₂ anode active material and a commercially available acetylene black conductive additive (10 mass% relative to the anode active material). Then, Al, the cathode (LiCoO₂), the electrolyte layer (LiTa₂PO₈), and the anode (LiTaO₂) were stacked in air in this order on aluminum foil heated to 200°C in order to allow quick reaction with moisture in the air, thereby producing a prototype all-solid-state battery. The heating was performed at 200°C to accelerate film formation.

For evaluation of the battery, constant-voltage charge-discharge measurement (0.5 mV/sec) was performed (Fig. 15). Assuming that the produced battery operates as a resistor, linear behavior is expected because V = IR; however, the measurement results showed a curve having a specific area during charging and discharging, which suggests that charging and discharging involved some kind of reaction.

### Reference Example 1

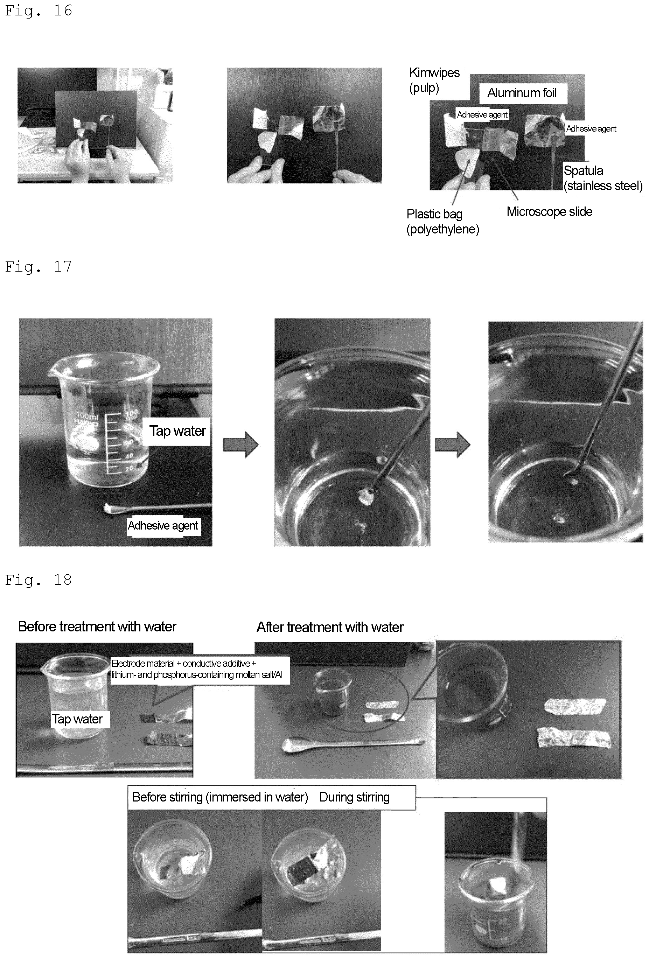

The above Examples demonstrated that the phosphorus-containing molten salt solution of the present invention can bond ion conductors. As other materials, bonding of aluminum foil (aluminum), a spatula (stainless steel), a microscope slide (glass), a plastic bag (polyethylene), Kimwipes (pulp), and the like were performed using the lithium-containing phosphorus solution obtained in Example 1. The results are shown in Fig. 16. Since the adhesive agent of the present invention has high viscosity and contains phosphorus, it is suggested that the bonding may be achieved due to surface corrosion of each material caused by phosphoric acid, entry of the adhesive agent into subtle gaps in each material, or curing thereof.

### Reference Example 2

The ion-conducting species- and phosphorus-containing molten salt (adhesive agent) obtained in Example 1 was added to a large amount of tap water. The changes over time are shown in Fig. 17. As a result, the formation of Li₃PO₄ by hydrolysis was observed.

### Reference Example 3

A mixture of the ion-conducting species- and phosphorus-containing molten salt (adhesive agent) obtained in Example 2, a commercially available LiMn₂O₄ cathode active material, and a commercially available acetylene black conductive additive (10 mass% relative to the cathode active material) was applied to aluminum foil and cooled at 25°C to prepare a sample, and the sample was then added to a large amount of tap water. The changes over time are shown in Fig. 18. The results revealed that the material coated on the aluminum foil was removed due to hydrolysis, indicating that the material bonded with the adhesive agent of the present invention can be easily peeled off.

### Example 7: Production Method for Adhesive Agent (Carbonate of Group 1 Element or Group 2 Element of the Periodic Table)

First, at room temperature (25°C) in air, commercially available NH₄H₂PO₄ and a commercially available compound having a Group 1 element or a Group 2 element of the periodic table (Na₂CO₃, K₂CO₃, MgO, or CaCO₃) were used and mixed such that the molar ratio of phosphorus and the compound having a Group 1 element or a Group 2 element of the periodic table, i.e., the amount ratio of P to Na or K in the case of Na₂CO₃ or K₂CO₃, was 1:0.2, or the amount ratio of P to Ca or Mg in the case of MgO or CaCO₃, was 1:0.05. The mixture was then heated at 210°C for 1.5 hours, thereby producing an adhesive agent.

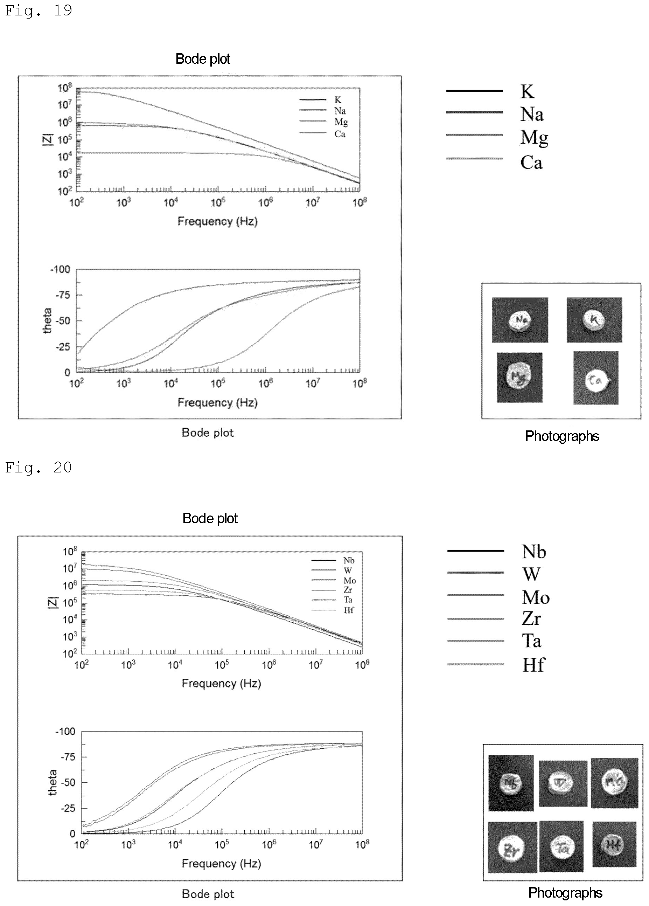

The produced adhesive agent was poured into a quartz tube with an inner diameter of 10 mm, aluminum foil was attached as electrodes to both ends of the quartz tube using finger pressure, and cooling was performed at 25°C to obtain a measurement sample in a solid or gel state. The ionic conductivity of the sample was evaluated by an AC impedance method (100 MHz to 100 Hz). The Bode plot obtained from the measurement and appearance photographs are shown in Fig. 19.

### Example 8: Production Method for Adhesive Agent (Addition of Transition Metal Oxide)

First, at room temperature (25°C) in air, commercially available NH₄H₂PO₄, commercially available lithium carbonate, and a commercially available transition metal oxide (Nb₂O₅, W₂O₃, MoO₃, ZrO, Ta₂O₅, CrO₂, TiO₂, V₂O₃, La₂O₃, CeO₂, HfO₂, Fe₂O₃, MnO₂, Co₃O₄, or NiO₂) were used and mixed such that the molar ratio of phosphorus, lithium, and the metal oxide, i.e., the amount ratio of P, Li, and each transition metal, was 1:0.2:0.2. The mixture was then heated at 210°C for 1.5 hours, thereby producing an adhesive agent

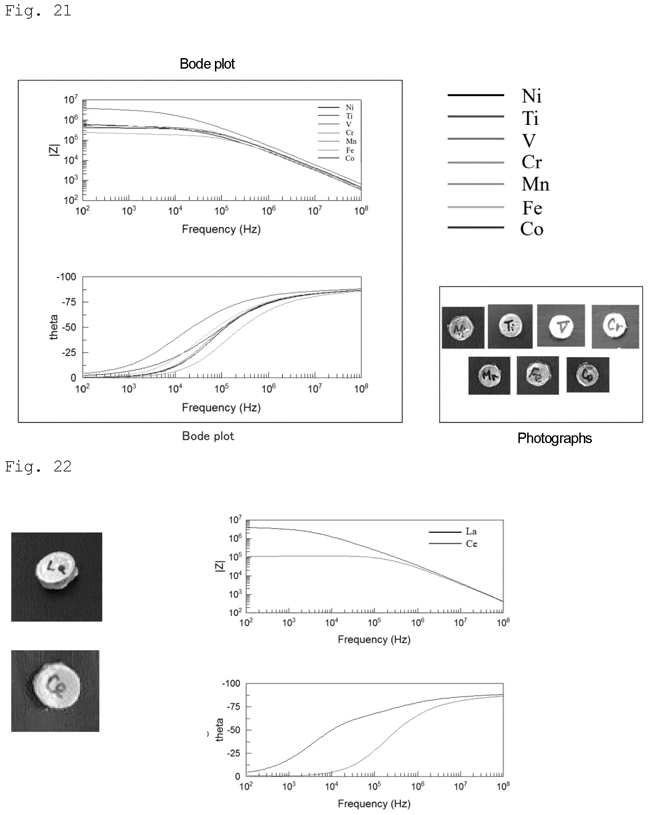

The produced adhesive agent was poured into a quartz tube with an inner diameter of 10 mm, aluminum foil was attached as electrodes to both ends of the quartz tube using finger pressure, and cooling was performed at 25°C to obtain a measurement sample in a solid or gel state. The ionic conductivity of the sample was evaluated by an AC impedance method (100 MHz to 100 Hz). The Bode plots obtained from the measurement and appearance photographs are shown in Figs. 20 to 22.

### Example 9: Production Method for Adhesive Agent (Addition of Oxide of Group 13 Element of Periodic Table)

First, at room temperature (25°C) in air, commercially available NH₄H₂PO₄, commercially available lithium carbonate, and a commercially available oxide of a Group 13 element of the periodic table (B₂O₃, Al₂O₃, or InO₂) were used and mixed such that the molar ratio of phosphorus, lithium, and the oxide of a Group 13 element of the periodic table was 1:0.2:0.2. The mixture was then heated at 210 for 1.5 hours, thereby producing an adhesive agent.

Furthermore, at room temperature (25°C) in air, NH₄H₂PO₄, lithium carbonate, and gallium oxide (Ga₂O₃) were used and mixed such that the molar ratio of phosphorus, lithium, and gallium oxide, i.e., the amount ratio of P, Li, and Ga was 1:0.2:0.2. The mixture was then heated at 210°C for 1 hour and at 220°C for 30 minutes, thereby producing an adhesive agent.

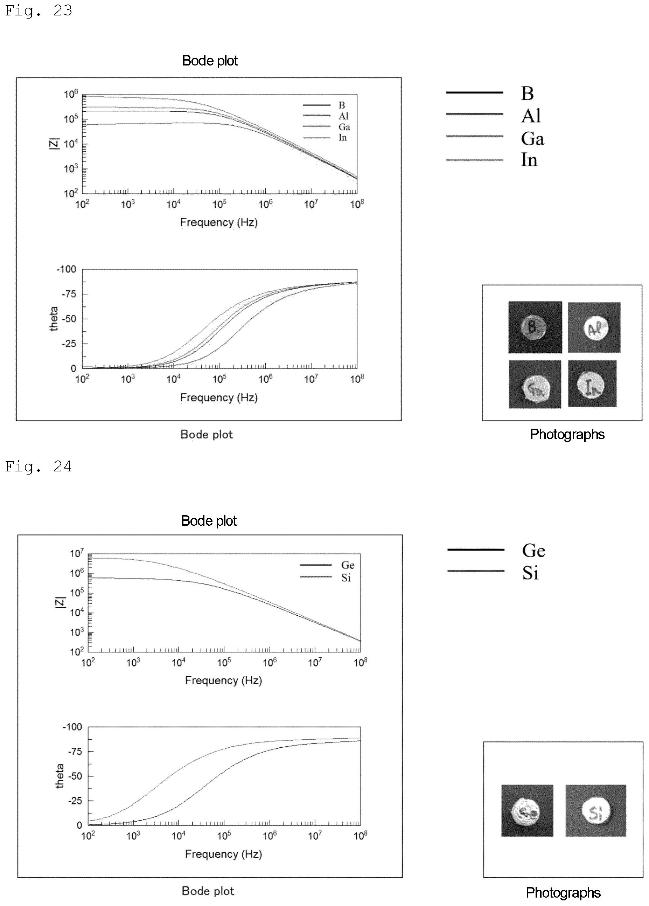

The produced adhesive agent was poured into a quartz tube with an inner diameter of 10 mm, aluminum foil was attached as electrodes to both ends of the quartz tube using finger pressure, and cooling was performed at 25°C to obtain a measurement sample in a solid or gel state. The ionic conductivity of the sample was evaluated by an AC impedance method (100 MHz to 100 Hz). The Bode plot obtained from the measurement and appearance photographs are shown in Fig. 23.

### Example 10: Production Method for Adhesive Agent (Addition of Oxide of Group 14 Element of the Periodic Table)

First, at room temperature (25°C) in air, commercially available NH₄H₂PO₄, commercially available lithium carbonate, and a commercially available oxide of a Group 14 element of the periodic table (SiO₂ or GeO₂) were used and mixed such that the molar ratio of phosphorus, lithium, and the oxide of a Group 14 element of the periodic table, i.e., the amount ratio of P, Li, and the Group 14 element, was 1:0.2:0.2. The mixture was then heated at 210°C for 1.5 hours, thereby producing an adhesive agent.

The produced adhesive agent was poured into a quartz tube with an inner diameter of 10 mm, aluminum foil was attached as electrodes to both ends of the quartz tube using finger pressure, and cooling was performed at 25°C to obtain a measurement sample in a solid or gel state. The ionic conductivity of the sample was evaluated by an AC impedance method (100 MHz to 100 Hz). The Bode plot obtained from the measurement and appearance photographs are shown in Fig. 24.

### Example 11: Production Method for Adhesive Agent (Addition of Halogen Ion)

First, at room temperature (25°C) in air, commercially available NH₄H₂PO₄ and a commercially available halide (LiF, LiCl, LiBr, or LiI) were weighed such that the molar ratio of phosphorus to halogen, i.e., the amount ratio of P to halogen, was 1:0.2.

Thereafter, only the NH₄H₂PO₄ was heated at 210°C for 1 hour, followed by mixing with the halide. The mixture was then heated at 220°C for 0.5 hours, thereby producing an adhesive agent.

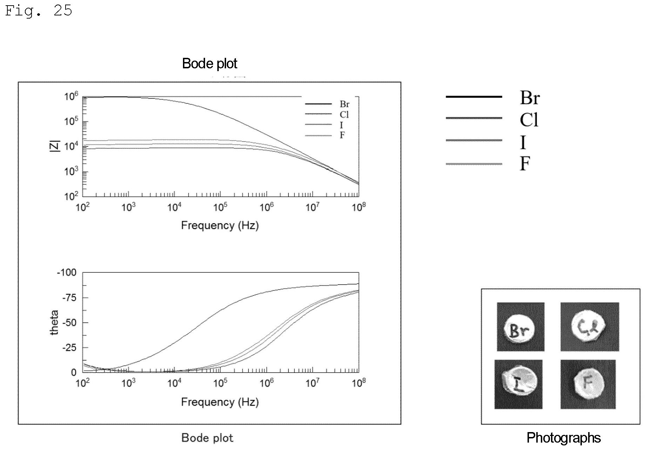

The produced adhesive agent was poured into a quartz tube with an inner diameter of 10 mm, aluminum foil was attached as electrodes to both ends of the quartz tube using finger pressure, and cooling was performed at 25°C to obtain a measurement sample in a solid or gel state. The ionic conductivity of the sample was evaluated by an AC impedance method (100 MHz to 100 Hz). The Bode plot obtained from the measurement and appearance photographs are shown in Fig 25.

### Example 12: Production Method for Adhesive Agent (Carbonate of Group 11 Element or Group 12 Element of the Periodic Table)

At room temperature (23°C) in air, commercially available NH₄H₂PO₄, commercially available lithium carbonate, and a commercially available compound containing Cu or Zn (CuCO₃·Cu(OH)₂·H₂O or [ZnCO₃]₂·[Zn(OH)₂]₃) were used and mixed such that the molar ratio of phosphorus, lithium, and copper or zinc, i.e., the amount ratio of P, Li, and Cu or Zn, was 1:0.2:0.2. The mixture was then heated at 210°C for 1.5 hours, thereby producing a phosphorus-containing molten salt.

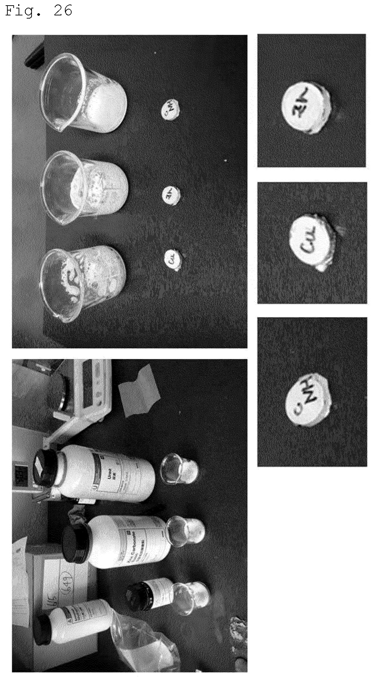

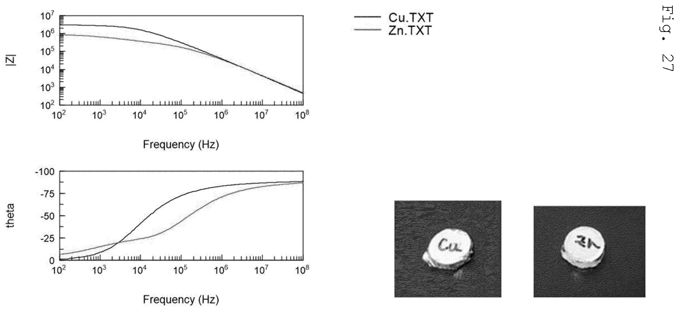

The produced phosphorus-containing molten salt was poured into a quartz tube with an inner diameter of 10 mm, aluminum foil was attached as electrodes to both ends of the quartz tube using finger pressure, and cooling was performed at 23°C to obtain a measurement sample in a solid or gel state. The ionic conductivity of the sample was evaluated by an AC impedance method (100 MHz to 100 Hz). The Bode plots obtained from the measurement and appearance photographs are shown in Figs. 26 and 27.

### Example 13: Production Method for Adhesive Agent (Urea)

At room temperature (23°C) in air, commercially available NH₄H₂PO₄, commercially available lithium carbonate, and commercially available urea (CO(NH₂)₂) were used and mixed such that the ratio of phosphorus, lithium, and nitrogen (ammonium ion) in the urea, i.e., the amount ratio of P, Li, and N, was 1:0.2:0.2. The mixture was then heated at 210°C for 1.5 hours, thereby producing a phosphorus-containing molten salt.

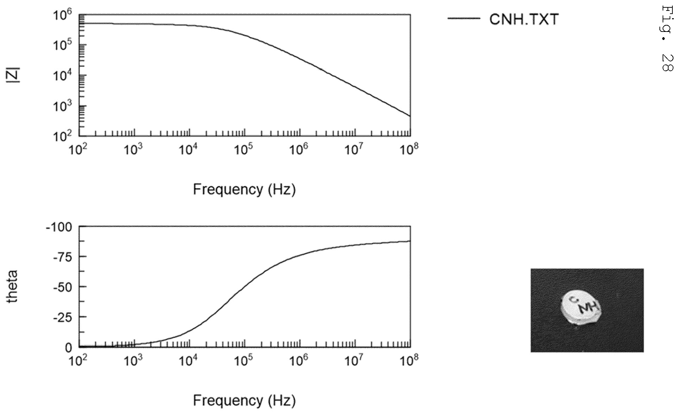

The produced phosphorus-containing molten salt was poured into a quartz tube with an inner diameter of 10 mm, aluminum foil was attached as electrodes to both ends of the quartz tube using finger pressure, and cooling was performed at 23°C to obtain a measurement sample in a solid or gel state. The ionic conductivity of the sample was evaluated by an AC impedance method (100 MHz to 100 Hz). The Bode plots obtained from the measurement and appearance photographs are shown in Figs. 26 and 28.

## Claims

1. An adhesive agent for use in bonding particles of a powder material to each other or bonding the powder material to a thin-film material, the adhesive agent satisfying the following:
(1) comprising a phosphorus-containing molten salt that is an ion conductor precursor, and an ion-conducting species;
(2) comprising a phosphorus-containing molten salt that is an ion conductor precursor, the phosphorus-containing molten salt being a salt of an ion-conducting species of phosphoric acid; or
(3) comprising a phosphorus-containing molten salt that is an ion conductor precursor, wherein the powder material has an ion-conducting species on its surface.

2. The adhesive agent according to claim 1, wherein the powder material is at least one selected from the group consisting of an ion conductor, an electrode active material, a metal material, an organic material, a glass material, and a ceramic material.

3. The adhesive agent according to claim 1 or 2, wherein the adhesive agent is a liquid, a gel, or a solid.

4. The phosphorus-containing molten salt according to claim 1 or 2, wherein the phosphorus-containing molten salt is at least one selected from the group consisting of phosphoric acid, a hydrogen phosphate, a condensed phosphoric acid, and an organophosphate compound.

5. The phosphorus-containing molten salt according to claim 1 or 2, wherein the ion-conducting species comprises at least one selected from the group consisting of an alkali metal ion and an alkaline earth metal ion.

6. The adhesive agent according to claim 1 or 2, wherein the adhesive agent satisfies condition (1) and is a mixture comprising a mixture of the phosphorus-containing molten salt and the ion-conducting species, and a solvent.

7. A method for producing a bonded body of particles of a powder material or a bonded body of the powder material and a thin-film material, the method comprising:
(I) bringing the powder material, or the powder material and the thin-film material, into contact with the adhesive agent according to claim 1 or 2.

8. The production method according to claim 7, wherein in step (I), a pressure treatment is performed after the mixing.

9. The production method according to claim 7, further comprising:
(II) heating the mixture obtained in step (1).

10. The production method according to claim 9, wherein the heating in step (II) is performed at a temperature of 30 to 500°C.
